# FASCICULE DE BREVET EUROPEEN

(11) **EP 0 879 157 B1**
(45) Date de publication et mention de la délivrance du brevet: **08.08.2001**
(21) Numéro de dépôt: 97905190.1
(22) Date de dépôt: 12.02.1997
(51) Int. Cl.: B60P 3/22, G06F 17/60

(54) **SYSTEME DE LIVRAISON CONTROLEE ET DE SUIVI DE LIVRAISON DE PRODUITS EN VRAC**
SYSTEM ZUR KONTROLLIERTEN AUSGABE UND ZUM VERFOLGEN DER AUSLIEFERUNG VON SCHUTTGÜTERN
SYSTEM FOR CONTROLLING AND MONITORING THE DELIVERY OF BULK MATERIALS

(30) Priorité: 12.02.1996 FR 9601903
(43) Date de publication de la demande: 25.11.1998
(73) Titulaire: TSCI (TECHNIQUE SERVICE CARROSSERIE INDUSTRIELLE), 22170 Plelo (FR)
(72) Inventeur: BLAIS, Christian, F-22000 Saint-Brieuc (FR)
(74) Mandataire: Le Faou, Daniel
(86) Numéro de dépôt international: FR9700265
(87) Numéro de publication internationale: WO9728985

(56) Documents cités:
- DE-A- 4 311 595
- DE-A- 4 404 876
- DE-U- 7 312 899
- FR-A- 2 601 768
- FR-A- 2 705 929
- US-A- 4 591 705
- US-A- 5 154 314
- US-A- 5 420 797

## Description

La présente invention concerne un système de livraison contrôlée, et de suivi de livraison, de produits en vrac, depuis un centre de production vers plusieurs lieux de stockage, ceci au moyen d'un véhicule-citerne, compartimenté ou non.

Par la désignation "véhicule-citerne", on entendra dans la présente description, ainsi que dans les revendications qui suivent, un véhicule comportant une carrosserie pouvant présenter différentes formes telles que, par exemple : caisson parallélépipèdique rectangle, cuve cylindrique, semi-cylindrique, ou autre.

On entendra par "véhicule-citerne compartimenté" un véhicule comportant une telle carrosserie divisée en plusieurs cases aptes à recevoir des produits différents.

On entendra par "cellule" soit - dans le cas d'une citerne non compartimentée - la case unique destinée à recevoir le produit, soit - dans le cas d'une citerne compartimentée -, chacune des cases réceptrices de cette citerne.

Sous le terme "système" on entendra l'ensemble des moyens qui, lorsqu'ils sont mis en oeuvre, permettent d'assurer la livraison contrôlée.

Plus précisément, le système qui fait l'objet de l'invention s'adresse à un centre de production comportant un ensemble de silos distributeurs contenant chacun un produit différent, une aire de chargement du véhicule située à proximité de ces silos, et des moyens distributeurs adaptés au transfert sélectif d'une certaine quantité de produit dans la cellule réceptrice du véhicule ou, si la citerne est compartimentée, dans une cellule de cette citerne.

Il s'adresse également, après transport du produit contenu dans la cellule, ou dans une cellule, du véhicule-citerne, à un centre de réception lui-même pourvu d'un ou de plusieurs réceptacles de stockage, tels que des silos par exemple, munis de moyens de remplissage. Ces derniers peuvent consister notamment en des ouvertures ménagées dans la paroi du réceptacle - par exemple en partie supérieure du silo - ou en des embouts de raccordement à un conduit de remplissage.

Le transfert sélectif s'opère alors entre la cellule, ou une cellule et le réceptacle sélectionné.

L'invention a été conçue et développée en liaison avec des camions-citernes compartimentés, pour la livraison d'aliments du bétail, les lieux de stockage étant par conséquent des élevages.

Les aliments du bétail sont des produits granulaires ou pulvérulents, définis comme étant des agglomérés, des miettes, ou des farines.

Il va de soi toutefois que l'invention est applicable à d'autres types de produits en vrac, granulaires, pulvérulents, voire liquides ou semi-liquides.

L'amélioration des conditions de production dans les usines d'aliments du bétail a permis, au cours de ces dernières années, d'obtenir une bonne sécurité quant à la qualité de fabrication et au contrôle du cheminement des fabrications jusqu'au dernier stade de la production, à savoir la mise en réserve des aliments dans des réservoirs de stockage en vue de leur chargement ultérieur dans des véhicules de distribution.

A partir de ce stade, les différentes opérations subséquentes sont laissées à l'initiative et au contrôle de la personne chargée de la livraison ; il s'agit généralement du chauffeur du véhicule, celui-ci ayant en charge le choix de l'organisation de sa tournée, le remplissage des différents compartiments - ou cellules - de son véhicule avec le bon aliment, le vidage de cet aliment dans le bon silo récepteur, chez le client - à savoir l'éleveur -.

On comprend immédiatement qu'une telle organisation ne permet aucun contrôle ni a priori, ni a posteriori, ce qui présente une faille importante dans la chaîne de transfert de l'aliment depuis la production jusqu'à son arrivée auprès de l'utilisateur.

Selon la méthode actuelle, le chauffeur affecté à un véhicule prend habituellement connaissance de sa prochaine tournée, et répartit dans la (ou les) différente(s) cellule(s) de son camion-citerne les différents produits qu'il aura à livrer selon l'importance de chaque lot et le sens de sa tournée. Ce choix est mis en exécution, soit par le chauffeur lui-même, soit par une personne affectée à cette tâche au centre de production, couramment désignée "chargeur".

Après transport, le chauffeur repère le silo dans lequel il doit livrer le produit, et place le moyen de déchargement - conduit à vis sans fin ou tuyau pneumatique - en position ad-hoc, et ouvre la cellule où se trouve le produit ; généralement ceci consiste à ouvrir une trappe ou une vanne située au fond de la cellule, de sorte que le produit s'écoule par gravité dans un système de convoyage s'étendant en-dessous des trappes, par exemple une vis sans fin ou une chaîne à palettes racleuses, apte à transférer le produit vers un conduit orientable qui l'amène au silo.

Des véhicules de transport de matériaux en vrac de ce type sont décrits par exemple dans les documents FR-B-2 679 498 et FR-A-2 705 929, tous deux déposés au nom de la demanderesse.

Sur d'autres véhicules, le déchargement du produit se fait par voie pneumatique, au moyen d'un tuyau souple.

Après avoir pratiqué de cette manière avec l'ensemble des lots, le chauffeur rentre à l'usine.

On comprend que toutes les opérations de livraison sont laissées à la bonne connaissance et à la bonne appréciation du chauffeur, et que le contrôle est uniquement réalisé par cette personne elle-même, sans aucune surveillance ni traçabilité.

La présente invention a pour objectif d'organiser et de fiabiliser ces différentes opérations afin d'obtenir :
- a priori, la sécurité de bonne livraison, sans risque - ou pratiquement sans risque - d'erreurs ;
- a posteriori, la possibilité de remonter les informations afin de les analyser (traçabilité).

Pour atteindre cet objectif, le principe à la base de l'invention est de garantir et de sécuriser tout d'abord la relation entre chacun des silos de l'usine - ou silos distributeurs - et la cellule, ou une cellule de la citerne du véhicule chargé de la livraison, puis la relation entre cette cellule et le réceptacle prévu pour le recevoir sur un lieu de livraison.

Il convient de noter que par le document US-A-5 420 797 (représentant l'état de la technique le plus pertinent en vue des caractéristiques des préambules des revendications indépendentes 1 et 10) on connait un procédé de distribution de carburants à partir d'un centre de stockage vers les réservoirs des détaillants, au moyen d'un camion compartimenté. La distribution se fait en fonction d'un programme prédéterminé, dont les données sont enregistrées sur une carte à mémoire passive (ROM). A chaque cellule du camion-citerne, et à chaque entrée d'un réservoir du détaillant, est associé un élément d'identification tel qu'une étiquette, également à mémoire passive. Le chauffeur dispose d'une tête de lecture portable, comprenant une mémoire à accès (RAM), une mémoire passive (ROM), et un émetteur de signal sonore ou lumineux. Grâce à cet appareil, à chaque livraison, le chauffeur peut identifier la cellule dans laquelle il envisage de pomper du carburant et le réservoir du détaillant, par lecture de leurs étiquettes. L'appareil émet un signal l'informant si le "couple" cellule/réservoir en question est conforme ou, au contraire, non conforme au programme.

Ce système connu permet donc de réduire le risque d'erreurs dans la livraison, mais ne permet pas de les éliminer réellement.

En effet, après que le "couple" correct ait été ainsi déterminé, le risque subsiste que le branchement ne se fasse pas entre la "bonne" cellule et le "bon" réservoir. De plus, ce système n'assure pas une tracibilité complète du centre de production jusqu'au client, via le camion-citerne, mais seulement du camion au client.

Dans le système de livraison qui fait l'objet de l'invention, le centre de production comprend, de manière connue, un ensemble de silos distributeurs contenant chacun un produit différent, une aire de chargement du véhicule située à proximité desdits silos, ainsi que des moyens distributeurs adaptés pour transférer sélectivement une certaine quantité de produit d'un silo dans la ou les cellule(s) de la citerne du véhicule, tandis que chacun des lieux de stockage comporte au moins un réceptacle, tel qu'un silo récepteur, muni de moyens de remplissage, tels qu'une ouverture ou un embout de raccordement.

Conformément à l'invention, d'une part, l'aire de chargement est équipée d'un dispositif de mesure du poids de la charge de produit délivré dans la cellule, ou dans chaque cellule du véhicule-citerne, tel qu'un pont-bascule ou une trémie peseuse et, d'autre part, le centre de production est équipé d'un système informatique auquel ledit dispositif de mesure fournit des informations relatives au poids du chargement, ce système informatique étant adapté pour piloter et contrôler cette distribution de façon continue et certaine, via une interface de chargement. Des données relatives à la nature et à la quantité du produit, ou des produits, devant être chargé(s) dans la (ou les) cellule(s) et à sa (leurs) destination(s) sur les lieux de stockage sont tout d'abord saisies par ce système informatique, puis transférées sur les lieux de stockage, de telle sorte que, le véhicule se trouvant sur l'aire de chargement, le système informatique assure la distribution continue et certaine du (ou des) produit(s) souhaité(s) dans la (ou les) cellule(s), puis que, sur les lieux de stockage, soit garantie la distribution continue et certaine du produit adéquat dans le réceptacle prévu pour le recevoir.

Dans un mode de réalisation possible, il est attribué à chaque véhicule un support informatique, tel qu'une carte à mémoire ou un automate programmable par exemple, sur lequel peuvent être enregistrées ces données ; ce support assure le transfert des données du centre de production sur les lieux de stockage ; sur ces lieux de stockage, soit le support est lu par un second système informatique, lequel est par exemple embarqué sur le véhicule (cas d'une carte à mémoire), soit il restitue les informations qu'il contient (cas d'un automate programmable).

Selon un mode de réalisation, la citerne étant compartimentée, et les moyens distributeurs étant adaptés pour transférer sélectivement une certaine quantité de produit d'un silo distributeur dans une cellule de la citerne, on saisit sur ledit système informatique du centre de production des données relatives à la répartition et à la quantité des produits qui, en fonction de la tournée de livraison prévue, doivent être chargés dans les différentes cellules de sorte que, lorsque le véhicule se trouve sur l'aire de chargement, ledit système informatique assure la distribution et la répartition des produits souhaités dans les différentes cellules.

Dans un mode de réalisation préféré de ce système:
- d'une part, à la cellule, ou à chacune des cellules du véhicule-citerne, est associé un élément d'identification, tel qu'une étiquette, qui est fixé à proximité de l'ouverture de remplissage de cette cellule ;
- d'autre part, lesdits moyens distributeurs sont équipés d'un moyen de reconnaissance, tel qu'une tête de lecture, qui est adapté pour venir en regard de l'élément d'identification d'une cellule, dans une position dite "de lecture", lorsque les moyens distributeurs se trouvent en position convenable - dite de distribution - pour assurer le déversement du produit dans cette même cellule et qui, au contraire, ne vient pas en regard de l'élément d'identification, si les moyens distributeurs sont écartés de la position de distribution ;
- et ledit moyen de reconnaissance est adapté pour générer un signal qui autorise et/ou commande le déversement en continu du produit à l'intérieur de la cellule lorsque survient une situation dans laquelle, à la fois, il se trouve en position de lecture et il effectue une identification de la cellule qui est en accord avec le programme informatique, ce déversement étant interdit ou arrêté dans toute autre situation.

L'interrogation de l'élément d'identification par la tête de lecture se fait donc automatiquement lorsqu'on va effectuer le chargement du camion. Ce chargement va pouvoir se faire seulement si le couple silo/cellule est correct, conforme au programme. Il va se faire en continu tant que va s'effectuer la lecture. En revanche, si cette lecture s'interrompt, notamment par suite d'un déplacement relatif inopiné entre les moyens distributeurs et le camion, le chargement va cesser aussitôt.

Avantageusement, le véhicule de livraison possède un conduit distributeur pouvant être alimenté en produit à partir de la cellule ou, sélectivement, à partir de chaque cellule, via une trappe disposée en fond de cellule, et dont le déchargement est contrôlé par un système de contrôle informatique embarqué sur le véhicule, et qui est capable de lire les informations enregistrées sur ledit support informatique.

Dans cette hypothèse, selon un mode de réalisation préféré du système :
- d'une part, sur les lieux de stockage, à chaque réceptacle est associé un élément d'identification, tel qu'une étiquette, qui est fixé à proximité ou sur les moyens de remplissage du réceptacle ;
- d'autre part, le conduit distributeur du véhicule est équipé d'une tête de lecture connectée audit système informatique embarqué, et qui est positionnée et adaptée pour venir en regard de l'élément d'identification associé au réceptacle dans une position dite "de lecture" lorsque le conduit distributeur se trouve dans une position convenable - dite de distribution - pour assurer le transfert du produit d'une cellule dans ce même réceptacle et qui, au contraire, ne vient pas en regard de l'élément d'identification si le conduit distributeur est écarté de cette position de distribution ;
- et ladite tête de lecture est adaptée pour générer un signal qui autorise et/ou commande le transfert du produit en continu d'une cellule dans le réceptacle lorsque survient une situation dans laquelle, à la fois, elle se trouve en position de lecture, et elle effectue une identification du réceptacle qui est en accord avec le programme informatique de la livraison, ce transfert étant interdit ou arrêté dans toute autre situation.

L'interrogation de l'élément d'identification par la tête de lecture se fait donc automatiquement lorsqu'on va effectuer le déchargement d'une cellule. Ce déchargement va pouvoir se faire seulement si le couple cellule/réceptacle est correct, conforme au programme. Il va se faire en continu, tant que va s'effectuer la lecture. En revanche, si cette lecture s'interrompt, notamment par suite d'un déplacement du conduit distributeur, le déchargement va cesser aussitôt.

Le dispositif de mesure équipant l'aire de chargement mesure le poids de la charge de produit délivré dans la cellule dans le cas d'une citerne mono-compartimentée, ou dans chaque cellule de la citerne dans le cas d'une citerne multi-compartimentée.

Par ailleurs, selon un certain nombre de caractéristiques additionnelles, non limitatives, de ce système :
- lesdits moyens distributeurs comportent une partie mobile, telle qu'un tapis-navette qui, au cours du chargement, est déplacée sélectivement par rapport au camion-citerne, celui-ci étant immobile sur l'aire de chargement ;
- lesdits moyens distributeurs comportent une partie fixe, telle qu'une trémie-peseuse qui, au cours du chargement, surplombe le camion-citerne, ce dernier étant déplacé séquentiellement sur l'aire de chargement.

Ce système est particulièrement, mais non exclusivement adapté à la livraison d'aliments du bétail, les lieux de stockage étant alors des élevages (silos de différentes fermes).

Fait également partie de l'invention un camion-citerne pouvant être mis en oeuvre dans un tel système de livraison ; ce camion est remarquable en ce que, d'une part, à la cellule de la citerne ou - en cas de citerne compartimentée - à chacune de ses cellules, est associé un élément d'identification, tel qu'une étiquette, destiné à être reconnu par un dispositif de reconnaissance dont est doté le centre de production et, d'autre part, il est équipé d'un système informatique embarqué et d'un conduit distributeur muni d'un lecteur d'étiquettes connecté à ce système embarqué et apte à identifier chacun des réceptacles des lieux de stockage.

D'autres caractéristiques et avantages de l'invention apparaîtront de la description et des dessins annexés qui en représentent, à simple titre d'exemples non limitatifs, des modes de réalisation possible :
- la figure 1 est une vue générale schématique d'un camion de livraison qui se trouve sur un centre de production, sur une aire de chargement ;
- la figure 2 est un schéma-blocs représentant le système informatique du centre de production ;
- la figure 3 est une vue de détail montrant l'embouchure du conduit distributeur porté par le véhicule, ainsi que la zone d'entrée d'un silo récepteur de livraison ;
- la figure 4 est une vue schématique d'un camion de livraison sur un lieu de stockage, en cours d'opération de déchargement dans un silo récepteur ;
- la figure 5 est un schéma-blocs représentant le système informatique embarqué sur le camion-citerne, ainsi que ses différents périphériques ;
- la figure 6 représente, très schématiquement, une variante de l'aire de chargement sur le centre de production ;
- la figure 7 est une vue très schématique, représentant une variante du système de déchargement sur le lieu de stockage ;
- les figures 8 et 9 sont des vues schématiques similaires aux figures 1 et 7 respectivement, qui illustrent les opérations de chargement et de déchargement d'un camion-citerne mono-compartimenté ;
- les figures 10 et 11 sont des organigrammes fonctionnels destinés à illustrer la manière dont sont pilotées, respectivement, les opérations de chargement d'une cellule du camion au centre de production, d'une part, et de déchargement d'une cellule sur le lieu de livraison, d'autre part.

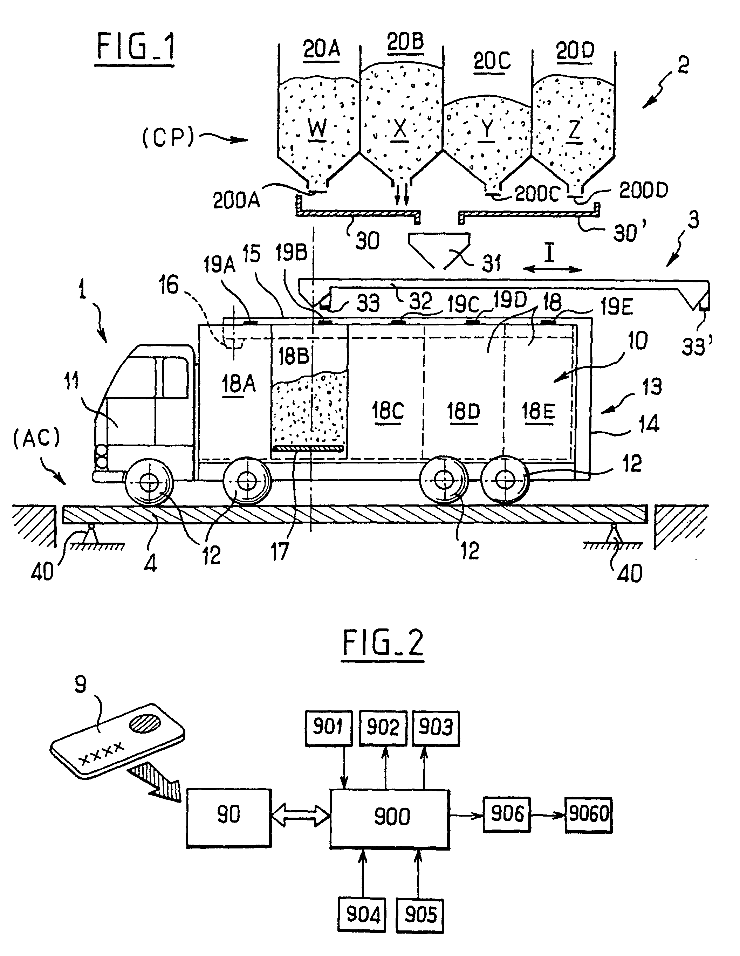

A la figure 1, on a représenté, vu de côté, un camion 1 comprenant une cabine de conduite 11, une citerne compartimentée 10 et des roues 12.

Les compartiments - ou cellules - de la citerne, au nombre de cinq dans l'exemple représenté, sont référencés 18A, 18B, 18C, 18D et 18E.

De manière bien connue, au fond de chaque compartiment est installée une trappe 17 susceptible d'être ouverte ou fermée ; lorsque la trappe est ouverte, elle laisse s'écouler par gravité le produit contenu dans la cellule, et celui-ci est acheminé à l'arrière de la citerne par un convoyeur (vis sans fin ou chaîne à palette racleuse notamment) pour être ensuite distribué par un système de déchargement orientable 13, comprenant notamment un conduit vertical arrière 14 et un tube pivotant 15 dont l'extrémité libre présente une goulotte d'évacuation 16.

Ce type de camion-citerne est bien connu ; il est notamment décrit dans les deux documents de brevet cités plus haut.

Le centre de production **CP** comporte un ensemble 2 de silos distributeurs juxtaposés 20, contenant chacun un produit en vrac différent, de nature et/ou de granulométrie bien déterminées, en l'occurrence des aliments pour le bétail.

Dans l'exemple illustré à la figure 1, les silos sont au nombre de quatre, et sont référencés 20A, 20B, 20C et 20D.

Leur orifice de sortie est obturé par une trappe 200, susceptible d'être ouverte en vue du déchargement du produit qui y est contenu.

Les quatres catégories d'aliments contenus dans les silos 20A à 20D sont référencées respectivement **W**, **X**, **Y** et **Z**.

L'aire de chargement **AC** sur laquelle est destiné à stationner le camion 1 au cours du chargement se trouve à proximité de l'ensemble 2 de silos distributeurs, en l'occurrence sensiblement en-dessous de cet ensemble.

Cette aire de chargement comprend un pont-bascule 4 monté sur des capteurs de pesée 40 (du type de jauges de contraintes), susceptibles de fournir un signal électrique représentatif du poids total (chargement compris) du véhicule placé sur le pont bascule.

A l'ensemble de silos 2 est associé un système de distribution de type connu, comportant des tapis convoyeurs 30, 30', une trémie réceptrice intermédiaire 31, et un tapis navette 32 mobile horizontalement, dans un sens ou dans l'autre, comme cela est schématisé par la double flèche **I** à la figure 1.

De manière bien connue, en commandant en synchronisme les différentes trappes de silo 200 et le déplacement séquentiel du tapis navette 32, il est possible de transférer les quantités souhaitées d'aliments contenus dans les différents silos 20 dans les compartiments 18.

Selon une caractéristique de l'invention, il est prévu au voisinage de chacune des ouvertures de remplissage des cellules 18 un élément d'identification 19. Il s'agit par exemple d'une étiquette de type code à barres ou d'une étiquette électronique fixée, par collage - ou par tout autre moyen - sur le dessus de la citerne, juste à côté de l'ouverture de la case à laquelle elle est affectée. Elle porte un code qui est propre à cette case.

Le tapis-navette 32 est pourvu, à chacune de ses extrémités distributrices, d'une tête de lecture 33, 33', apte à lire ce code. Cette tête est positionnée de telle sorte qu'elle vienne en regard dc l'élément 19B d'une cellule donnée 18B, lorsque le tapis-navette se trouve en position de remplissage de cette case. Elle peut alors reconnaître cette case. Elle est connectée au système informatique du centre de production, qui, au moment du chargement, connaît donc la cellule dans laquelle on s'apprête à introduire le produit.

Le système informatique du centre de production, illustré à la figure 2, comprend une unité centrale 900 (ordinateur), avec ses périphériques usuels, à savoir un écran 902 (moniteur), un clavier 901et une imprimante 903.

Cette unité est connectée à un lecteur/chargeur 90 de support d'informations, en l'occurrence d'une carte à mémoire 9 (carte à puce).

Les informations provenant du lecteur d'étiquettes 33 ou 33' sont figurées par le bloc 904.

Les informations (de pesée) provenant des capteurs 40 sont figurées par le bloc 905.

L'unité centrale est adaptée pour commander, via une interface de chargement 906, l'actionnement à la fermeture ou à l'ouverture des différentes trappes de silo 200, ainsi que le déplacement du tapis navette 32, opération figurée par le bloc 9060.

Ce système informatique est par exemple de type "PC" ou similaire, et la carte 9 est une carte de stockage de type "PCMCIA".

De préférence, des informations relatives à chacun des modèles de véhicules susceptibles de se présenter à l'aire de chargement sont stockées sur le système de gestion informatique du chargement.

Ces données concernent notamment le nombre de compartiments de la citerne, leurs capacités respectives et leur identification particulière.

A chaque véhicule-citerne est associée une carte spécifique 9, qui contient des données sur celui-ci - modèle, numéro d'immatriculation, nombre de cases, leur capacité, etc -. Lorsque le chauffeur a pris connaissance de sa prochaine tournée, sa tâche première est d'établir , si cela n'a pas été déjà fait, la répartition dans les différents compartiments de son camion des produits qu'il aura à livrer, ceci en fonction de l'importance de chaque lot de produit et du sens de sa tournée.

La carte à mémoire 9 ayant été introduite dans le lecteur/chargeur de cartes 90 du système informatique, le chauffeur se présente en indiquant son nom et/ou son matricule. Ces informations sont chargées en même temps que son choix, qui va être introduit via le clavier 901 dans l'unité centrale 900, afin d'être mémorisé sur la carte. Ces informations resteront enregistrées sur la carte 9 jusqu'à la fin du processus de livraison.

Dans un autre mode de réalisation possible, les échanges d'informations entre le système informatique embarqué et l'unité centrale du centre de production sont réalisés par transmission radio. Un contrôle de la bonne réception des informations peut avantageusement être assuré par acquittement automatique.

Le camion s'étant placé sur l'aire de chargement, et plus précisément sur le pont-bascule, le chargement de sa citerne peut alors s'effectuer.

Le déplacement séquentiel du tapis-navette 3 ainsi que l'actionnement des différentes trappes 200 est piloté par le système informatique, en fonction du programme prévu. Cette opération est contrôlée par le lecteur d'étiquettes 33 ou 33', qui reconnaît, de manière certaine, la cellule qui est approvisionnée, ainsi que par les capteurs 40, qui - après soustraction - connaît le poids du produit déversé dans ladite cellule.

Dans la situation illustrée à la figure 1, c'est la cellule 18B qui est approvisionnée en produit **X**, à partir du silo 20B (dont la trappe est ouverte).

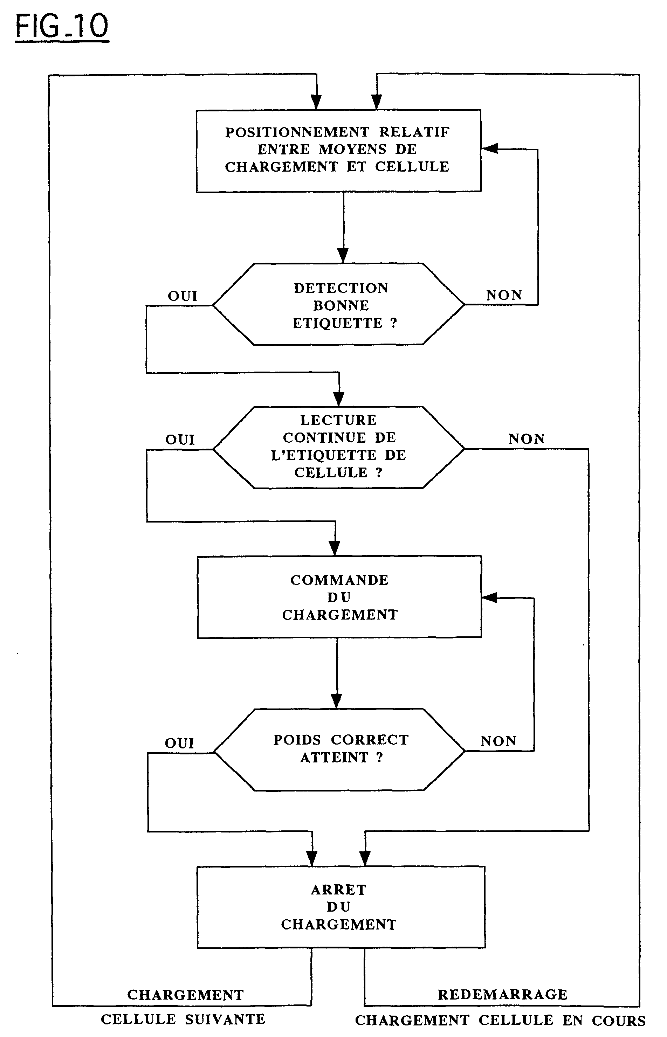

L'organigramme de la figure 10 permet de bien comprendre de quelle manière cette opération est pilotée, et contrôlée, en continu.

Les moyens distributeurs 3 sont tout d'abord positionnés par rapport au véhicule citerne dans une position favorable au chargement d'une cellule donnée, en l'occurrence la cellule 18B. Le lecteur d'étiquette doit alors se trouver normalement en regard de l'étiquette 19B. Si ce n'est pas le cas, et qu'une autre étiquette est détectée, les moyens distributeurs sont déplacés dans une nouvelle position, jusqu'à ce que la bonne étiquette soit détectée. Cette étiquette est ensuite lue, en continu, ce qui provoque automatiquement la commande du chargement, c'est-à-dire le déversement du produit **X** dans la cellule 18B. Cette opération se poursuit tant que le poids voulu (prévu par le programme) de produit à charger dans cette cellule n'est pas atteint. Lorsqu'il est atteint, l'arrêt du chargement est commandé. On peut alors passer au chargement d'une autre cellule.

On notera que si la lecture de l'étiquette est interrompue au cours de ce processus, par exemple par déplacement inopiné du camion par rapport aux moyens distributeurs, le chargement se trouve aussi arrêté automatiquement. Pour redémarrer le processus, il faut effectuer un repositionnement relatif entre les moyens distributeurs et le camion.

La citerne étant chargée, le chauffeur reprend sa carte et se transporte ensuite successivement vers chacun des lieux de livraison prévus dans sa tournée.

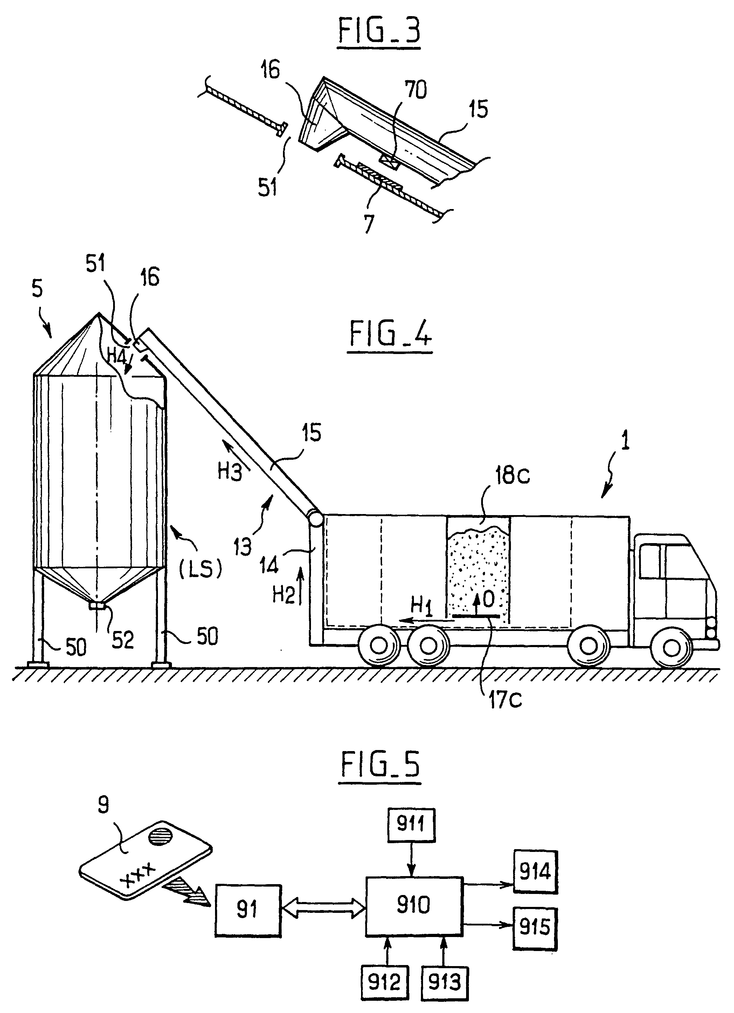

La figure 4 représente l'un des lieux de livraison, ou lieu de stockage **L S.**

Sur ce lieu, est installé un silo vertical 5, monté sur pieds 50, pourvu en partie haute d'un orifice de remplissage 51, et en partie basse d'un orifice de vidage 52.

Selon une caractéristique importante de l'invention, ce silo 5 est identifié par une étiquette 7 qui est fixée, par exemple par collage, sur la paroi du silo, à proximité de l'orifice d'entrée 51.

Il s'agit par exemple d'une étiquette de type code à barres ou d'une étiquette électronique.

L'étiquette porte un code qui est propre au silo 5 sur lequel elle est apposée.

A proximité de la goulotte distributrice 16, disposée à l'extrémité du conduit distributeur 15 du camion, est monté un lecteur d'étiquettes 70 ; celui-ci est positionné de telle manière qu'il vienne en regard et à proximité de l'étiquette 7 lorsque la goulotte 16 se trouve correctement située dans l'orifice d'entrée 51 du silo.

Dans le cas où on a affaire à des étiquettes code à barres, le lecteur 70 est par exemple du type connu sous la désignation commerciale INTERMEC ou DATALOGIC ; dans le cas d'étiquettes électroniques, on pourrait utiliser des antennes et étiquettes électroniques diffusées sous les dénominations commerciales "Antenne TIRIS RI-ANT-S01C" et "Disk TIRIS RI-TRP-R9QL" respectivement.. Ce même type de lecteur peut être utilisé pour les têtes 33, 33' précédemment mentionnées.

Sur le camion est installé un système informatique de contrôle/commande embarqué, ou calculateur "intelligent" équipé par exemple d'un lecteur de carte PCMCIA, et une liaison (par exemple du type RS 232) lui permettant de se connecter au lecteur d'étiquettes 70, ainsi qu'éventuellement un système d'affichage et un clavier.

Il peut aussi s'agir d'un automate programmable, par exemple du type distribué par la société TEXAS INSTRUMENTS sous la référence commerciale TIRIS 2500.

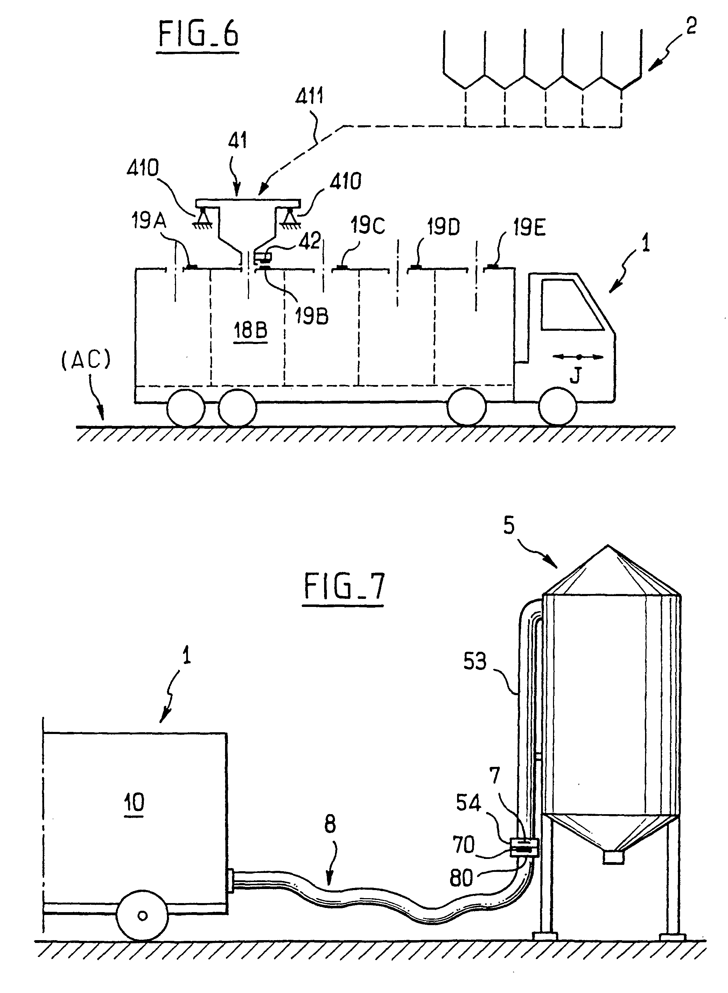

Sur la figure 5, le bloc 91 représente le lecteur de carte, le bloc 910/l'unité centrale, et le bloc 911 le clavier.

Les informations sur l'identification du silo par le lecteur d'étiquettes 70 sont figurées par le bloc 912.

Des détecteurs (interrupteurs par exemple) ou des capteurs de position appropriés, associés aux moyens d'ouverture et de fermeture des trappes, qui peuvent être de type connu (moteur électrique ou vérin hydraulique par exemple), sont également connectés à l'unité centrale 910, de telle façon que celle-ci est en permanence informée sur l'état de fermeture ou l'importance d'ouverture de chacune des trappes 17. Ces informations sont figurées par le bloc 913.

Enfin, l'unité 910 est connectée à une alarme, par exemple un gyrophare ou l'avertisseur sonore du véhicule. L'alarme est figurée par le bloc 914.

Le bloc 915 représente un afficheur - par exemple un écran de moniteur - qui va recevoir de l'unité centrale 910, et afficher, un ordre d'autorisation ou d'interdiction d'ouverture des trappes 17, ordre qui est destiné au chauffeur - ou autre opérateur - qui doit effectuer le déchargement du bon produit dans le bon silo.

La carte 9 étant introduite dans le lecteur, le chauffeur déploie le système de déchargement 14, 15, de telle manière que la goulotte de distribution 16 vienne se positionner dans l'orifice 51 du silo 5.

Supposons que ce silo doive recevoir l'aliment contenu dans le compartiment 18C.

Grâce à la lecture de l'étiquette 7 l'unité centrale 910 va tout d'abord s'assurer qu'il s'agit effectivement du bon silo.

Si tel n'est pas le cas, le déchargement est empêché, et, éventuellement, le chauffeur est averti de son erreur, par déclenchement d'une alarme appropriée.

Au contraire, si l'on a affaire au bon silo, d'après les données qui lui sont fournies par la carte 9, le système va autoriser l'ouverture de la trappe 17C, qui correspond à la cellule 18C, et éventuellement afficher un message d'autorisation.

Le chauffeur actionne alors les moyens d'ouverture de cette trappe, et procède au déchargement en continu de son contenu, opération symbolisée par les flèches **H**_{**1**}**, H**_{**2**}**, H**_{**3**} et **H**_{**4**} sur la figure 4.

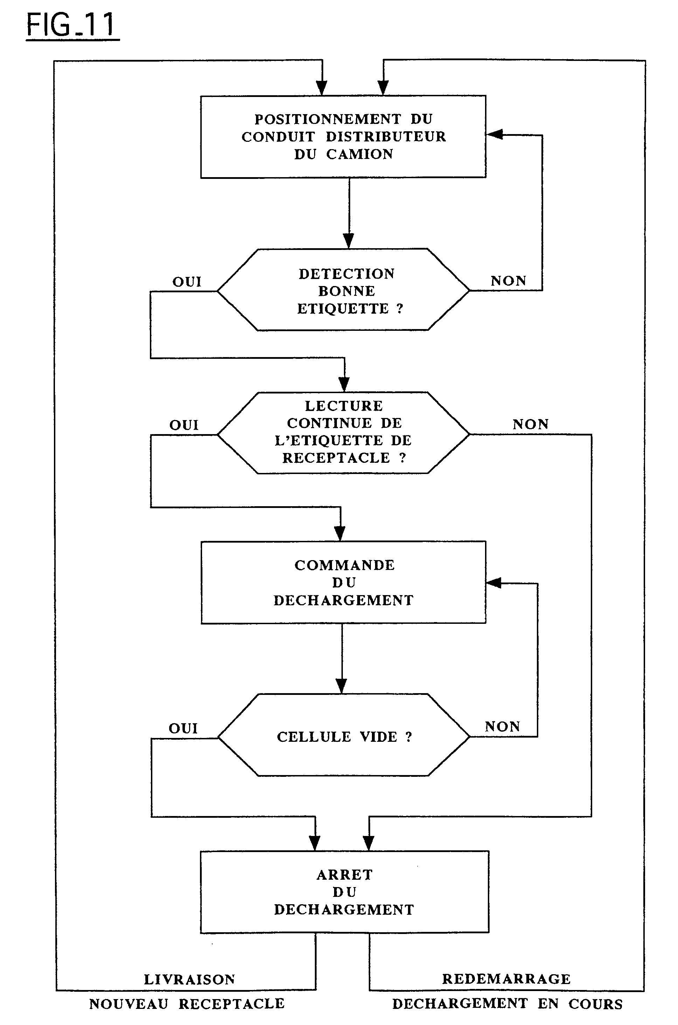

L'organigramme de la figure 11 permet de bien comprendre de quelle manière cette opération est pilotée, et contrôlée, en continu.

Le conduit de distribution 15 ayant été positionné par rapport au réceptacle (silo) 5 de telle manière que sa goulotte 16 soit à l'aplomb de l'orifice 51, le lecteur d'étiquettes 70 se trouve normalement en regard de l'étiquette 7 associée à cette ouverture. Cette étiquette est identifiée. Si elle est "bonne", c'est-à-dire si elle correspond bien au silo qui doit être approvisionné, l'opération se poursuit. Si ce n'est pas le cas, le conduit doit être déplacé, et amené en position de remplissage d'un autre silo, ceci jusqu'à ce que le bon silo soit trouvé. L'étiquette correspondante à ce bon silo est ensuite lue en continu, ce qui provoque automatiquement le vidage de la cellule affectée à ce silo, en l'occurrence 18C. Quand la cellule est vide, on commande l'arrêt des moyens de déchargement (fermeture de trappe et arrêt du convoyeur de fond de citerne), soit manuellement, soit automatiquement.

On peut alors passer à l'approvisionnement d'un autre réceptacle.

On notera que si la lecture de l'étiquette 7 est interrompue au cours de ce processus, notamment par déplacement inopiné (sous l'effet du vent par exemple) du conduit 15, le déchargement se trouve aussi arrêté automatiquement par fermeture de la trappe et/ou arrêt du convoyeur. Pour redémarrer le processus, il faut replacer le conduit 15 en position correcte.

Le déchargement étant terminé, le chauffeur se transporte ensuite au silo suivant, et ainsi de suite jusqu'à ce que sa tournée soit terminée.

Les données relatives à chacune des livraisons, notamment l'identification des silos visités, le nom du client, son adresse, l'identification des différentes trappes qui ont été actionnées, la date et l'heure de leur ouverture et fermeture, sont stockées (sur la carte 9 ou dans l'automate programmable) pour être transférées lors du retour au point de chargement.

Dans le cas où un problème est rencontré, le chauffeur peut décider de passer outre une interdiction qui lui est donnée par l'afficheur ; toutefois, dans cette hypothèse, le non respect de la consigne sera enregistrée avec les données sur la carte, ce qui permettra de conserver la traçabilité du processus, en vue par exemple de vérifications ultérieures sur la réalité du problème rencontré.

Quand le chauffeur se présente au centre de production, soit en fin de journée, soit pour sa tournée suivante, il procède au transfert de données de la carte dans le système informatique du centre de production.

Ce transfert pourrait être réalisé par transmission radio. Un contrôle de la bonne réception des informations peut dans ce cas être assuré par acquittement automatique.

A ce moment, sous réserve qu'il n'y a pas eu de surpassement des systèmes de sécurité, l'ensemble des opérations effectuées lors de la tournée sont stockées, ce qui permettra une vérification du bon déroulement de cette tournée et un retour sur l'information au cas où un incident apparaîtrai postérieurement.

Ces informations peuvent être aussi imprimées sur papier, au moyen de l'imprimante.

L'invention permet donc de vérifier que l'ensemble des livraisons se fait en toute sécurité et en conservant la possibilité, dans le temps, de remonter les informations nécessaires à l'analyse d'un incident décelé postérieurement.

Dans la variante représentée à la figure 6, le chargement du véhicule se trouvant sur l'aire de chargement 1 se fait, de manière connue, au moyen d'une trémie peseuse 41 supportée par des capteurs de pesée 410. Ceux-ci, comme les capteurs 40 du pont-bascule du mode de réalisation précédemment décrit, sont connectés au système informatique du centre de production.

La trémie peseuse 41 est approvisionnée de manière parfaitement sûre et contrôlée par le centre de production, à partir de l'un des silos sélectionnés de la série 2, par l'intermédiaire d'un convoyeur approprié, tel qu'un tapis mobile par exemple, symbolisé par le trait interrompu 411 à la figure 6.

A la trémie est associée une tête de lecture 42, similaire à la tête 33 ou 33' du mode de réalisation précédent.

Dans le mode de réalisation, le camion 1 est mobile, comme symbolisé par la double flèche **J** sur la figure.

Le chauffeur déplace séquentiellement le véhicule sur l'aire de chargement afin d'amener successivement l'ouverture de remplissage de chaque cellule 18 sous l'orifice distributeur de la trémie peseuse.

La tête de lecture se trouve à l'aplomb de l'étiquette 19 correspondant à cette case, et reconnaît cette dernière. Le système informatique pilote alors en conséquence, en fonction du programme de chargement, la mise en route des moyens de distribution 411-41.

Dans la variante de la figure 7, le déchargement de la citerne se fait - de manière connue - au moyen d'un tuyau flexible 8, parla voie pneumatique.

Ce tuyau 8 est pourvu, à son extrémité libre, d'un manchon - ou embout - 80 apte à être accouplé, par raccordement rapide (par exemple du type "raccord-pompier"), à un manchon complémentaire 54 monté à l'extrémité basse d'un conduit de remplissage 53 du silo 5.

Dans ce cas, l'étiquette identificatrice du silo 7 peut être prévue sur le manchon 54, tandis que le lecteur d'étiquettes 70 est solidaire du manchon 80 ; la lecture de l'étiquette se fait au moment du raccordement.

La transmission de l'information de la tête de lecture 70 au système embarqué peut se faire éventuellement par une liaison sans fil, par exemple par voie hertzienne, l'adaptation d'un fil sur le tuyau souple 8 étant délicate.

Bien entendu, aussi bien avec la variante de la figure 6 qu'avec celle de la figure 7, le fonctionnement du système de livraison, réalisé de manière continue et certaine, est similaire à celui précédemment décrit.

Sans sortir du cadre de l'invention, on pourrait prévoir une commande automatique des trappes 17 de la citerne, dont l'actionnement serait directement piloté par le système embarqué sur le véhicule.

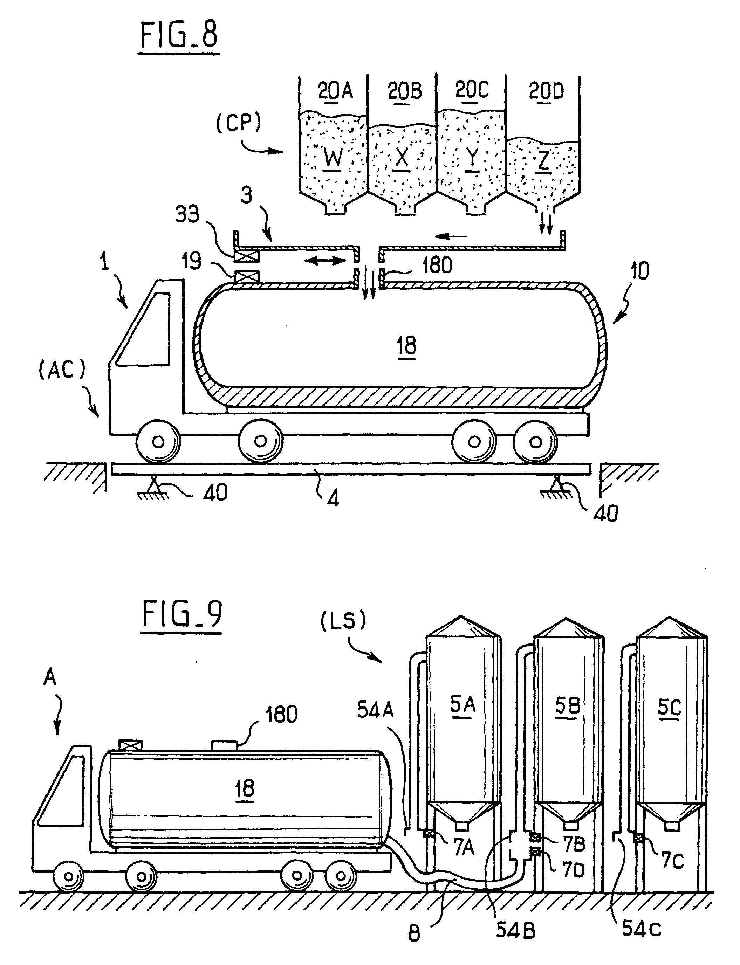

Dans le système illustré aux figures 8 et 9, on a affaire à un véhicule à citerne 10 non compartimentée, c'est-à-dire à cellule unique 18.

Sur ces figures, les mêmes chiffres de référence ont été utilisées pour désigner les éléments identiques ou similaires à ceux des figures 1 et 7 respectivement.

Le camion-citerne 1 est destiné à recevoir, au centre de production **CP**, un produit déterminé, en l'occurrence le produit **Z** contenu dans le silo distributeur 20D pour le transférer - en tout ou partie - à un silo récepteur donné - en l'occurrence 5B - situé sur les lieux de stockage **LS**.

Ces données, ainsi que d'autres relatives à la livraison, notamment le poids du produit **Z** à prélever, et le poids à transférer au silo 5B (et, éventuellement aussi à d'autres silos de stockage) sont enregistrées sur le support informatique affecté au véhicule.

Au centre de production s'opère la reconnaissance du véhicule - et de son besoin - par le système d'identification à lecture d'étiquette 33, 19. Il s'ensuit un actionnement ad hoc du système distributeur 3 dont l'orifice de déchargement est mobile, et qui amène le produit adéquat **Z**, en quantité voulue (contrôlée par les capteurs de pesée 40) dans la citerne 18, à travers son orifice de remplissage 180 (voir figure 8).

Sur les lieux de stockage **LS**, s'opère la reconnaissance du bon silo 5B, via le système de lecture d'étiquette 70-7B, et le transfert en continu de la quantité voulue de produit **Z** dans ce silo. Si le silo n'est pas le bon, le système de vidage de la citerne, par exemple pneumatique, ne peut pas être actionné et/ou un signal d'erreur est fourni à l'opérateur.

On est ainsi assuré que c'est le silo 5B qui est approvisionné en produit **Z.**

Dans les modes de réalisation du système qui vient d'être décrit, les données concernant la livraison sont portées par un support informatique - carte à mémoire ou automate programmable notamment - affecté à chaque véhicule. La lecture de ce support sur chacun des lieux de stockage, par le système informatique embarqué, permet de garantir que le bon produit arrive au bon réceptacle de stockage.

Il va de soi qu'on ne sortirait pas du cadre de la présente invention en transférant les données informatiques du centre de production vers les lieux de stockage et, le cas échéant, également en sens contraire, par une liaison à distance. Cette liaison pourrait être assurée en particulier par le réseau téléphonique (avec et/ou sans fil), via des modems appropriés.

On ne sortirait pas du cadre de l'invention en associant à la même cellule plusieurs éléments d'identification portant le même code. Ainsi, par exemple, deux étiquettes identiques pourraient être apposées en des emplacements différents à proximité de l'orifice de remplissage d'une cellule. Selon les commodités de l'opération de chargement, c'est l'une ou l'autre de ces étiquettes qui servirait à l'identification de la cellule au moment du chargement.

L'invention peut être mise en oeuvre dans différentes applications, autres que celle consistant à transporter des aliments pour le bétail d'un centre de production à des lieux d'élevage.

A titre d'exemple, on peut citer, comme autre application, celle consistant à transporter des composants rentrant dans la fabrication d'aliments pour le bétail depuis une usine productrice de ces composants à un centre de fabrication des aliments, cette application se trouvant par conséquent "en amont" de la précédente.

De manière générale, une telle organisation de la livraison peut être mise en oeuvre pour tout produit en vrac qui ne peut bénéficier au moment de son expédition d'un marquage individualisé (au contraire par exemple d'un produit conditionné en sacs). Grâce à l'invention, on réalise un marquage temporaire du contenu de la cellule, ou de chacune des cellules de citerne, qui permet d'identifier et de connaître son chargement. Ce marquage perdure jusqu'au transfert dans le silo du lieu de stockage.

## Revendications

1. Système de livraison contrôlée, et de suivi de livraison, de produits en vrac, depuis un centre de production (CP) vers plusieurs lieux de stockage (LS), au moyen d'un véhicule (1) à citerne (10), comprenant une ou plusieurs cellules réceptrices, dans lequel le centre de production comporte un ensemble de silos distributeurs (20) contenant chacun un produit différent (W, X, Y, Z), une aire de chargement (AC) du véhicule (1) située à proximité desdits silos (20), et des moyens distributeurs (200, 3 ; 411, 41) adaptés pour transférer sélectivement une certaine quantité de produit d'un silo (20) dans une cellule, tandis que chacun des lieux de stockage (LS) comporte au moins un réceptacle, tel qu'un silo récepteur (5), muni de moyens de remplissage tels qu'une ouverture (51) ou un embout de raccordement (54), caractérisé par le fait que, d'une part, l'aire de chargement (AC) est équipée d'un dispositif de mesure du poids de la charge de produit délivré dans la cellule, ou dans chaque cellule (18) du véhicule-citerne (1), tel qu'un pont-bascule (4) ou une trémie peseuse (41), et que, d'autre part, le centre de production (CP) est équipé d'un système informatique auquel ledit dispositif de mesure fournit des informations relatives au poids du chargement, ce système informatique étant adapté pour piloter et contrôler la distribution de façon continue et certaine, via une interface de chargement, des données relatives à la nature et à la quantité du produit, ou des produits, devant être chargé(s) dans la (ou les) cellule(s) et à sa (leur(s)) destination(s) sur les lieux de stockage (LS) étant tout d'abord saisies par ce système informatique, puis transférées sur les licux de stockage (LS), de telle sone que, le véhicule (1) se trouvant sur l'aire de chargement (AC), le système informatique assure la distribution continue et certaine du (ou des) produit(s) souhaité(s) dans la (ou les) cellule(s), puis que, sur les lieux de stockage (LS), soit garantie la distribution continue et certaine du produit (W, X, Y, Z) adéquat dans le réceptacle (5) prévu pour le recevoir.

2. Système selon la revendication 1, caractérisé par le fait qu'à chaque véhicule est attribué un support informatique (9), tel qu'une carte à mémoire ou un automate programmable par exemple, sur lequel peuvent être enregistrées lesdites données, ce support assurant le transfert des données du centre de production sur les lieux de stockage (LS), et que sur ces lieux, soit le support (9) est lu par un second système informatique, lequel est par exemple embarqué sur le véhicule (1), soit il restitue les informations qu'il contient.

3. Système selon l'une des revendications 1 ou 2, caractérisé par le fait que, la citerne étant compartimentée, et les moyens distributeurs (200, 3; 411, 41) étant adaptés pour transférer sélectivement une certaine quantité de produit d'un silo distributeur (20) dans une cellule (18) de la citerne, on saisit sur ledit système informatique (9) du centre de production (CP) des données relatives à la répartition et à la quantité des produits (W, X, Y, Z) qui, en fonction de la tournée de livraison prévue, doivent être chargés dans les différentes cellules de sorte que, lorsque le véhicule se trouve sur l'aire de chargement, ledit système informatique assure la distribution et la répartition des produits souhaités dans les différentes cellules (18A à 18E).

4. Système selon l'une des revendications 1 à 3, caractérisé par le fait que:
- d'une part, à la cellule, ou à chacune des cellules (18) du véhicule-citerne (1), est associé un élément d'identification (19), tel qu'une étiquette, qui est fixé à proximité de l'ouverture de remplissage de cette cellule ;
- d'autre part, lesdits moyens distributeurs (200, 3 ; 411, 41) sont équipés d'un moyen de reconnaissance (33, 42), tel qu'une tête de lecture, qui est adapté pour venir en regard de l'élément d'identification d'une cellule (18), dans une position dite "de lecture", lorsque les moyens distributeurs se trouvent en position convenable - dite de distribution - pour assurer le déversement du produit dans cette même cellule et qui, au contraire, ne vient pas en regard de l'élément d'identification, si les moyens distributeurs sont écartés de la position de distribution ;
- et que ledit moyen de reconnaissance (33, 42) est adapté pour générer un signal qui autorise et/ou commande le déversement en continu du produit à l'intérieur de la cellule (18) lorsque survient une situation dans laquelle, à la fois, il se trouve en position de lecture et il effectue une identification de la cellule (18) qui est en accord avec le programme informatique, ce déversement étant interdit ou arrêté dans toute autre situation.

5. Système selon l'une des revendications 1 à 4, dont le véhicule de livraison (1) possède un conduit distributeur (14-15; 8) pouvant *être* alimenté en produit à partir de la cellule ou, sélectivement, à partir de chaque cellule (18), via une trappe (17) disposée en fond de cellule, et dont le déchargement est contrôlé par un système de contrôle informatique embarqué sur le véhicule, et qui est capable de lire les informations enregistrées sur ledit support informatique.

6. Système selon la revendication 5, caractérisé par le fait que:
- d'une part, sur les lieux de stockage (LS), à chaque réceptacle (5) est associé un élément d'identification, tel qu'une étiquette (7), qui est fixé à proximité ou sur les moyens de remplissage (51, 54) du réceptacle ;
- d'autre part, le conduit distributeur (14-15 ; 8) du véhicule (1) est équipé d'une tête de lecture (70) connectée audit système informatique embarqué, et qui est positionnée et adaptée pour venir en regard de l'élément d'identification (7) associé *au* réceptacle (5) dans une position dite "de lecture" lorsque le conduit distributeur (14-15 ; 8) se trouve dans une position convenable - dite de distribution - pour assurer le transfert du produit d'une cellule (18) dans ce même réceptacle et qui, au contraire, ne vient pas regard de l'élément d'identification si le conduit distributeur (14-15 ; 8) est écarté de cette position de distribution;
- et que ladite tête de lecture (70) est adaptée pour générer un signal qui autorise et/ou commande le transfert du produit en continu d'une cellule (18) dans le réceptacle (5) lorsque survient une situation dans laquelle, à la fois, elle se trouve en position de lecture, et elle effectue une identification du réceptacle (5) qui est en accord avec le programme informatique de la livraison, ce transfert étant interdit ou arrêté dans toute autre situation.

7. Système selon l'une des revendications 1 à 6, caractérisé par le fait que lesdits moyens distributeurs comportent une partie mobile, telle qu'un tapis-navette (32) qui, au cours du chargement, est déplacée sélectivement par rapport au camion-citerne (1), celui-ci étant immobile sur l'aire de chargement (AC).

8. Système selon l'une des revendications 1 à 6, caractérisé par le fait que lesdits moyens distributeurs comportent une partie fixe, telle qu'une trémie-peseuse (41) qui, au cours du chargement, surplombe le camion-citerne (1), ce dernier étant déplacé séquentiellement sur l'aire de chargement (AC).

9. Système selon l'une des revendications précédentes, pour la livraison d'aliments du bétail, dans lequel les lieux de stockage (LS) sont des élevages.

10. Camion-citerne destiné à être mis en oeuvre dans un système de livraison contrôlé conforme à l'une des revendications précédentes, caractérisé par le fait, d'une part, qu'à la cellule de la citerne ou - en cas de citerne compartimentée- à chacune de ses cellules (18) est associé un élément d'identification tel qu'une étiquette (19), destiné à être reconnu par un dispositif de reconnaissance (33) dont est doté le centre de production (CP) et, d'autre part, qu'il est équipé d'un système informatique embarqué et d'un conduit distributeur (15 ; 8) muni d'un lecteur d'étiquettes (70) connecté à ce système embarqué et apte à identifier chacun des réceptacles (5) des lieux de stockage (LS).

## Patentansprüche

1. System zur kontrollierten Ausgabe und zum Verfolgen der Auslieferung von Schüttgütern aus einem Produktionszentrum (CP) an verschiedene Lagerstellen (LS) mit Hilfe eines Tankfahrzeuges (1), welches eine oder mehrere Zellen für die Aufnahme enthält, und bei dem das Produktionszentrum eine Reihe von Verteilersilos (20) enthält, die jeweils ein unterschiedliches Schüttgut (W, X, Y, Z) enthalten, sowie eine Laderampe (AC) für das Tankfahrzeug (1), die an diesen Silos (20) angeordnet ist, sowie Verteilermittel (200, 3; 411, 41), die so ausgelegt sind, dass sie wahlweise eine bestimmte Menge des Schüttgutes aus einem Silo (20) in eine Zelle transferieren können, wobei die einzelnen Lagerstellen (LS) mindestens einen Behälter aufweisen, wie zum Beispiel ein Aufnahmesilo (5), das mit Mitteln für die Befüllung, wie zum Beispiel einer Einfüllöffnung (51) oder einem Ansatzstück (54) ausgerüstet ist,
**dadurch gekennzeichnet, dass**
einerseits der Bereich für die Beladung (AC) mit einem Instrument für die Messung des Gewichtes des in die Zelle oder in jede einzelne Zelle (18) des Tankfahrzeugs (1) eingeladenen Schüttgutes ausgerüstet ist, wie zum Beispiel einer Brückenwaage (4) oder einem Wägebunker (41), und dass andererseits das Produktionszentrum (CP) mit einem Informatiksystem ausgerüstet ist, an das die Messvorrichtung die Informationen in bezug auf das Gewicht der Ladung liefert, wobei dieses Informatiksystem so ausgelegt ist, dass es die Verteilung über ein Ladungsinterface die Daten in bezug auf die Art und die Menge des Schüttgutes oder der Schüttgüter, das oder die in die Zelle oder die Zellen eingeladen werden soll, und ihre Bestimmungsorte an den Lagerstellen (LS) sicher steuern und kontrollieren kann, wobei diese Daten zuerst von dem Informatiksystem erfasst werden und dann an die Lagerstellen (LS) so übertragen werden, dass wenn sich das Tankfahrzeug (1) auf der Laderampe (AC) befindet, das Informatiksystem die kontinuierliche und sichere Verteilung des (oder der) gewünschten Schüttgüter in der oder den Zellen gewährleisten kann und dass dann an den Lagerorten (LS) die kontinuierliche und sichere Verteilung des entsprechenden Schüttgutes (W, X, Y) in dem hierfür vorgesehenen Behälter (5) gewährleistet ist.

2. System nach Anspruch 1,
**dadurch gekennzeichnet, dass**
jedem einzelnen Tankfahrzeug ein Datenträger (9) zugeordnet ist, wie zum Beispiel eine Speicherkarte oder ein programmierbarer Automat, auf denen die entsprechenden Daten aufgezeichnet werden können, wobei dieser Datenträger die Weiterleitung dieser Daten aus dem Produktionszentrum an den Lagerort (LS) gewährleistet, und dass an diesen Orten dieser Datenträger (9) entweder von einem zweiten Informatiksystem abgelesen wird, das sich zum Beispiel an Bord des Tankfahrzeugs (1) befindet, oder die in diesem Informatiksystem enthaltenen Informationen wiederhergestellt werden können.

3. System nach einem der Ansprüche 1 oder 2,
**dadurch gekennzeichnet, dass**
da das Tankfahrzeug in Abteile unterteilt ist, und die Mittel für die Verteilung (200, 3; 411, 41) so ausgelegt sind, dass sie wahlweise eine gewisse Menge des Schüttgutes aus einem Verteilersilo (20) in eine Zelle (18) des Tankfahrzeugs weiterleiten kann, werden aus diesem Informatiksystem (9) des Produktionszentrums (CP) die Daten bezüglich der Aufteilung und der Menge der Schüttgüter (W, X, Y, Z) abgerufen, die je nach der geplanten Auslieferung in die verschiedenen Zellen eingeladen werden sollen, so dass, wenn sich das Tankfahrzeug auf der Laderampe befindet, dieses Informatiksystem die Verteilung und Aufteilung der gewünschten Schüttgüter in den verschiedenen Zellen (18A bis 18E) gewährleistet.

4. System nach einem der Ansprüche 1 bis 3,
**dadurch gekennzeichnet, dass**
- einerseits der jeweiligen Zelle oder den einzelnen Zellen (18) des Tankfahrzeuges (1) ein Element für die Identifizierung (19), wie zum Beispiel ein Etikett, zugeordnet ist, das in der Nähe der Einfüllöffnung dieser Zelle angeordnet ist;
- und andererseits diese Verteilermittel (200, 3; 411, 41) mit einem Erkennungsmittel (33, 42), wie zum Beispiel einem Ablesekopf versehen sind, der so ausgelegt ist, dass er gegenüber dem Element für die Identifizierung einer Zelle (18) in einer sogenannten "Ableseposition" angeordnet werden kann, wenn sich die Verteilermittel in der geeigneten Position - der sogenannten Verteilerstellung - befinden, um das Einschütten des Schüttgutes in die ausgewählte Zelle zu gewährleisten, und das sich dagegen nicht gegenüber dem Element für die Identifizierung befindet, wenn die Verteilermittel aus der Verteilerposition verschoben werden;
- und dass dieses Erkennungsmittel (33, 42) so ausgelegt ist, dass es ein Signal erzeugen kann, welches die kontinuierliche Einschüttung des Schüttgutes innerhalb der Zelle (18) autorisiert und/oder steuert, wenn ein Umstand eintritt, in dem es sich sowohl in der Ableseposition befindet als auch eine Identifizierung der Zelle (18) durchführt, die mit dem Informatikprogramm übereinstimmt, diese Einschüttung in jeder anderen Situation untersagt oder unterbrochen wird.

5. System nach einem der Ansprüche 1 bis 4,
**dadurch gekennzeichnet, dass**
das Tankfahrzeug (1) mit einer Verteilerleitung (14 - 15; 8) ausgerüstet ist, die aus der Zelle oder wahlweise aus jeder der Zellen (18) über eine Bodenluke (17) versorgt werden kann, die am Boden der Zelle angeordnet ist und deren Entladung mit Hilfe mit einem an Bord des Tankfahrzeugs befindlichen Informatiksystems für die Steuerung ausgestattet und geeignet ist, die auf dem Datenträger gespeicherten Informationen abzulesen.

6. System nach Anspruch 5,
**dadurch gekennzeichnet, dass**
- einerseits am Lagerort (LS) jedem der Behälter (5) ein Element für die Identifizierung, wie zum Beispiel ein Etikett (7), zugeordnet ist, das in der Nähe oder an den Einfüllmitteln (51, 54) selbst des Behälters angebracht ist;
- und andererseits die Verteilerleitung (14 - 15; 8) des Tankfahrzeugs (1) mit einem Ablesekopf (70) ausgerüstet ist, der an das an Bord mitgeführte Informatiksystem angeschlossenen und so positioniert und ausgelegt ist, dass es gegenüber dem Behälter (5) angeordneten Element für die Identifizierung (7) in der "Ableseposition" liegt, wenn sich die Verteilerleitung (14 - 15; 8) in der entsprechenden Stellung, das heißt, der "Verteilerstellung" befindet, um die Weiterleitung des Schüttgutes einer Zelle (18) in eben diesem Behälter zu gewährleisten, und sich dagegen nicht gegenüber dem Element für die Identifizierung befindet, wenn die Verteilerleitung (14- 15) aus dieser Verteilerposition entfernt wird;
- und dieser Ablesekopf (70) so ausgelegt ist, dass er ein Signal erzeugt, welches die kontinuierliche Weiterleitung des in einer Zelle (18) enthaltenen Schüttgutes in den Behälter (5) autorisiert und/oder steuert, wenn ein Umstand eintritt, in der er sich sowohl in der Ableseposition befindet als auch eine Identifizierung des Behälters (5) durchführt, welche mit dem programmierten Lieferprogramm übereinstimmt, wobei diese Weiterleitung in allen anderen Situationen untersagt oder unterbrochen wird.

7. System nach einem der Ansprüche 1 bis 6,
**dadurch gekennzeichnet, dass**
die Verteilermittel einen beweglichen Teil, wie zum Beispiel ein Rollband (32) enthalten, welches während der Beladung des Tankfahrzeugs wahlweise gegenüber diesem Tankfahrzeug (1) verschoben wird, das auf der Laderampe (AC) feststeht.

8. System nach einem der Ansprüche 1 bis 6,
**dadurch gekennzeichnet, dass**
diese Verteilermittel einen festen Teil enthalten, wie zum Beispiel einen Messbunker (41), welcher während der Beladung über dem Tankfahrzeug wahlweise über diesem Tankfahrzeug (1) angeordnet ist, wobei dieses Tankfahrzeug fortlaufend auf der Laderampe (AC) verschoben wird.

9. System nach einem der vorausgegangenen Ansprüche,
**dadurch gekennzeichnet, dass**
es für die Lieferung von Futtermitteln für Rinder bestimmt ist und die einzelnen Lagerstellen (LS) Zuchtstationen sind.

10. Tankfahrzeug für den Einsatz in einem Liefersystem, welches nach einem der vorausgegangenen Ansprüche gesteuert wird,
**dadurch gekennzeichnet, dass**
einerseits - im Falle einer unterteilten Zelle des Tankfahrzeugs, jeder einzelnen Zelle (18) ein Element für die Identifizierung zugeordnet ist, wie zum Beispiel ein Etikett (19), welches mit Hilfe einer Erkennungsvorrichtung (33) erkannt werden kann, mit dem das Produktionszentrum (CP) ausgerüstet ist, und dass es andererseits mit einem an Bord mitgeführten Informatiksystem und mit einer Verteilerleitung (15, 8) ausgerüstet ist, die mit einem Etikettenleser (70) ausgestattet sind, der an das an Bord mitgeführte System angeschlossen und geeignet ist, die einzelnen Behälter (5) der Lagerorte (LS) zu identifizieren.

## Claims

1. A system for controlling and monitoring the delivery of bulk materials from a production center (CP) to a plurality of storage sites (LS) by means of a tanker vehicle (1) having a tank (10) comprising one or more receiving cells, wherein the production center has a set of dispenser silos (20) each containing a different material (W, X, Y, Z), a loading area (AC) for the vehicle (1) situated close to said silos (20), and dispenser means (200, 3; 411, 41) adapted selectively to transfer a certain quantity of material from a silo (20) into a cell, while each of the storage locations (LS) has at least one receptacle such as a receiver silo (5) fitted with filler means such as an opening (51) or a connection endpiece (54), the system being characterized in that firstly the loading area (AC) is fitted with a device for measuring the weight of the load of material dispensed into the cell, or into each cell (18) of the tanker vehicle (1), such as a weighbridge (4) or a metering hopper (41), and that secondly the production center (CP) is fitted with a computer system to which said measuring device supplies information relating to loading weight, said computer system being adapted to drive and control dispensing on a continuous and certain basis via a loading interface, data relating to the nature and the quantity of the material or materials to be loaded into the cell(s) and the destination(s) thereof on the storage sites (LS) being initially input to the computer system and then transferred to the storage sites (LS) such that when the vehicle (1) is in the loading area (AC) the computer ensures that the desired material(s) is/are dispensed in continuous and certain manner into the cell(s) and then, on the storage sites (LS) it guarantees continuous and certain dispensing of appropriate material (W, X, Y, Z) into the receptacle (5) for receiving it.

2. A system according to claim 1, characterized by the fact that each vehicle has a computer medium (9) allocated thereto, such as a memory card or a programmable controller, for example, suitable for having said data recorded therein, the medium serving to transfer data from the production center to the storage sites (LS) and that on said sites, either the medium (9) is read by a second computer system, e.g. on board the vehicle (1), or else it plays back the information it contains.

3. A system according to claim 1 or claim 2, characterized by the fact that the tank is compartmentalized, and the dispenser means (200, 3; 411, 41) are adapted to transfer selectively a certain quantity of material from a dispenser silo (20) into a cell (18) of the tank, the said computer system (9) of the production center (CP) having data input thereto relating to the distribution and the quantities of materials (W, X, Y, Z) which are to be loaded into the various cells as a function of the intended delivery round so that when the vehicle is on the loading area, said computer system ensures that the desired materials are dispensed and distributed amongst the various cells (18A to 18E).

4. A system according to any one of claims 1 to 3, characterized by the fact that:
- firstly, the or each cell (18) of the tanker vehicle (1) is associated with an identifier element (19) such as a label which is fixed in the vicinity of the filling opening of the cell;
- secondly, said dispenser means (200, 3; 411, 41) are fitted with recognition means (33, 42) such as a read head adapted to be brought into register with the identifier element of a cell (18) in a "read" position when the dispenser means are in a suitable "dispensing" position for pouring material into said cell, and which on the contrary does not come into register with the identifier element if the dispenser means are away from the dispensing position; and
- said recognition means (33, 42) is adapted to generate a signal which authorizes and/or controls continuous pouring of the material into the cell (18) when a situation arises in which simultaneously it is in the read position and it identifies a cell (18) that matches the computer program, such pouring being prevented or stopped in any other situation.

5. A system according to any one of claims 1 to 4, in which the delivery vehicle (1) possesses a dispenser duct (14-15; 8) suitable for being fed with material from the cell or, selectively, from each cell (18) via a hatch (17) placed in the bottom of the cell, with unloading being controlled by the computer control system on board the vehicle which is capable of reading information stored on said computer medium.

6. A system according to claim 5, characterized by the fact that:
- firstly, on the storage sites (LS) each receptacle (5) is associated with an identifier element such as a label (7) which is fixed close to or on the filler means (51, 54) of the receptacle;
- secondly, the dispenser duct (14-15; 8) of the vehicle (1) is fitted with a read head (70) connected to said on-board computer system and positioned and adapted to come into register with the identifier element (7) associated with the receptacle (5) in a "read" position when the dispenser duct (14-15; 8) is in a suitable "dispensing" position for transferring material from a cell (18) into said receptacle, and which on the contrary does not come into register with the identifier element if the dispenser duct (14-15; 8) is away from said dispensing position; and
- that said read head (70) is adapted to generate a signal which authorizes and/or controls transfer of the material continuously from a cell (18) into the receptacle (5) when a situation arises in which, simultaneously, it is in the read position and it identifies a receptacle (5) which matches the delivery computer program, said transfer being prevented or stopped in any other situation.

7. A system according to any one of claims 1 to 6, characterized by the fact that said dispenser means include a moving portion such as a shuttle-conveyor (32) which, during loading, is moved selectively relative to the tanker truck (1) which itself remains stationary on the loading area (AC).

8. A system according to any one of claims 1 to 6, characterized by the fact that said dispenser means include a fixed portion such as a metering hopper (41) which, during loading, overlies the tanker truck (1), the truck being moved sequentially over the loading area (AC).

9. A system according to any preceding claim, for delivering animal fodder, in which the storage sites (LS) are farms.

10. A tanker truck for use in a controlled delivery system according to any preceding claim, the truck being characterized by the fact that firstly the cell of the tank, or in a compartmentalized tank, in each of its cells (18), is associated with an identifier element such as a label (19) suitable for being recognized by a recognition device (33) provided at the production center (CP) and secondly it is fitted with an on-board computer system and a dispensing duct (15; 8) provided with a label reader (70) connected to said on-board system and suitable for identifying each of the receptacles (5) of the storage sites (LS).
